## Europäisches Patentamt
## European Patent Office
## Office européen des brevets

(19)

(11) Veröffentlichungsnummer: **0 043 413**
**B1**

# (12) EUROPÄISCHE PATENTSCHRIFT

(45) Veröffentlichungstag der Patentschrift:
**16.10.85**

(21) Anmeldenummer: **81103096.4**

(22) Anmeldetag: **24.04.81**

(51) Int. Cl.⁴: **A 01 K 7/06**

(54) **Einrichtung zum Tränken von Tieren.**

(30) Priorität: **04.07.80 DE 3025366**

(43) Veröffentlichungstag der Anmeldung:
**13.01.82 Patentblatt 82/2**

(45) Bekanntmachung des Hinweises auf die Patenterteilung:
**16.10.85 Patentblatt 85/42**

(84) Benannte Vertragsstaaten:
**AT BE CH FR IT LI NL**

(56) Entgegenhaltungen:
**DE - A - 1 507 059**
**DE - B - 1 782 411**

(73) Patentinhaber: **SUEVIA HAIGES GMBH & CO.,**
**Postfach 1108 Max-Eyth-Strasse,**
**D-7125 Kirchheim/Neckar (DE)**

(72) Erfinder: **Haiges, Adolf, Hölderlinstrasse 10,**
**D-7124 Bönnigheim (DE)**

(74) Vertreter: **Wolff, Michael, Dipl.-Phys., Kirchheimer**
**Strasse 69, D-7000 Stuttgart 75 (DE)**

**Beschreibung**

Die Erfindung betrifft eine Einrichtung zum Tränken von Tieren, mit einem Tränkebecken und einer im Becken angeordneten Ventilvorrichtung, die einen mittels eines normalerweise längs einer zentralen Achse der Ventilvorrichtung angeordneten Stabes gegen die Rückstellkraft einer Feder kippbaren Ventilkörper, der am hinteren Ende des Stabes gelagert ist, und einen ortsfesten Ventilsitz, der mit dem beweglichen Stab einen Wasserdurchlass bildet, als mit dem Wasserdruck schliessendes Ventil aufweist; und mit einer bei geschlossenem Ventil im wesentlichen koaxial zum Stab angeordneten Hülse als Wasserleitung zwischen einem Ventilgehäuse und dem Becken, welche mit mehreren Wasserdurchlässen versehen ist und an ihrem vorderen Ende radial spielarm am vorderen Ende des Stabes sowie an ihrem hinteren Ende unter Bildung eines grösseres Spiel gebenden Ringspaltes am vorderen Ende des Ventilgehäuses gelagert ist.

Bei einer aus der DE-A-1 507 059 bekannten Einrichtung dieser Art ist die an ihrem vorderen Ende geschlossene Hülse auf das mit einem Gewinde versehene vordere Ende des Stabes geschraubt und sind als Wasserdurchlässe achsparallele Schlitze in der Hülse vorgesehen, durch die das Wasser radial austritt.

Daran ist nachteilig, dass eine dem Ventilkörper zugeordnete Gummimanschette von dem sich selbst tränkenden Tier über den Stab mittels der Hülse drehbar ist, so dass ein Gummiabrieb an der Dichtungsfläche des Ventilgehäuses erfolgen kann, der möglicherweise zu einem die Ventilfunktion beeinträchtigenden Verschleiss der Gummimanschette führt. Ein zusätzlicher Nachteil besteht darin, dass bei der vorgesehenen waagrechten Anordnung der zentralen Achse des Stabes und der Hülse das ins Maul des sich selbst tränkenden Tieres gespritzte Wasser auf die Wandung der Mundhöhle trifft, was dem Tier unangenehm sein muss und zu Wasserverlust durch aus dem mehr oder weniger geöffneten Maul herauslaufendes Wasser führt.

Der Erfindung liegt daher die Aufgabe zugrunde, eine Einrichtung zum Tränken von Tieren zu schaffen, deren Gebrauchszweck nicht durch Verschleiss und Wasserverlust beeinträchtigt ist.

Diese Aufgabe ist bei einer Einrichtung der eingangs genannten Art erfindungsgemäss dadurch gelöst, dass bei vertikaler Anordnung der zentralen Achse ein die Wasserdurchlässe aufweisender, locker auf dem Stab sitzender Einsatz im unteren Ende der Hülse vorgesehen ist, welcher auf einer radialen Verbreiterung des unteren, aus der Hülse herausragenden Stabendes steht.

Dadurch wird vorteilhafterweise erreicht, dass das sich selbst tränkende Tier mangels drehfester Verbindung zwischen Hülse und Stab eine Drehung des Ventilkörpers um die Stabachse nicht bewirken kann, und dass das Wasser in Richtung der Achse der Hülse aus dieser austritt, ohne die Oberfläche des Wassers im Tränkebecken weiträumig zu bespritzen.

Bei einer bevorzugten Ausführungsform der erfindungsgemässen Einrichtung ist als radiale Verbreiterung des unteren, aus der Hülse herausragenden Stabendes eine auf das mit einem Gewinde versehene untere Stabende geschraubte Mutter vorgesehen. Diese Art der Verbreiterung ist leicht auszuführen und gestattet eine problemlose Montage der Hülse.

Für Jungtiere, die eine empfindliche Schnauze haben, ist die bevorzugte Ausführungsform so eingerichtet, dass die Hülse mindestens eine äussere Ringnut aufweist, die einen radial vorstehenden Ring aus weich-elastischem Material aufnimmt, das die Jungtiere bei der Ventilbetätigung nicht zurückschrecken lässt.

Die bevorzugte Ausführungsform zeichnet sich durch einen mittels seines oberen Endes an eine Wasserzuleitung anschliessbaren, am Becken festklemmbaren Stutzen aus, an dessen unterem Ende das Ventilgehäuse hängt. Infolgedessen ist die Montage der erfindungsgemässen Einrichtung erheblich einfacher als diejenige, der aus der DE-A-2 900 161 bekannten ähnlichen Einrichtung, wo das Ventilgehäuse am Becken gelagert und das untere Ende der Wasserzuleitung mit dem oben aus dem Becken herausragenden Ventilgehäuse verschraubt ist.

Schliesslich ist bei der bevorzugten Ausführungsform am oberen Ende des Ventilgehäuses ein der unteren Stirnfläche des Stutzens gegenüberliegender Bund vorgesehen und trägt dort das Ventilgehäuse eine am Bund angreifende Überwurfmutter, die, vorzugsweise unter Einklemmung einer Dichtungsscheibe mit zentraler Drosselbohrung zwischen Bund und unterer Stutzenstirnfläche, auf ein Aussengewinde am unteren Stutzenende schraubbar ist. Mittels Bund und Überwurfmutter kann das Ventilgehäuse mit Stab und Hülse bequem am Stutzen befestigt und von ihm gelöst werden. Die Drosselbohrung begrenzt Wasserdruck und -menge auf einfache Weise.

Im folgenden ist die Erfindung anhand der durch die Zeichnung beispielhaft dargestellten, bevorzugten Ausführungsform der erfindungsgemässen Einrichtung und einer Variante im einzelnen erläutert. Es zeigt:

Fig. 1 einen teilweise abgebrochen dargestellten zentralen, vertikalen Längsschnitt durch die bevorzugte Ausführungsform; und

Fig. 2 eine Seitenansicht einer Ventil- mit Betätigungsvorrichtung der Variante.

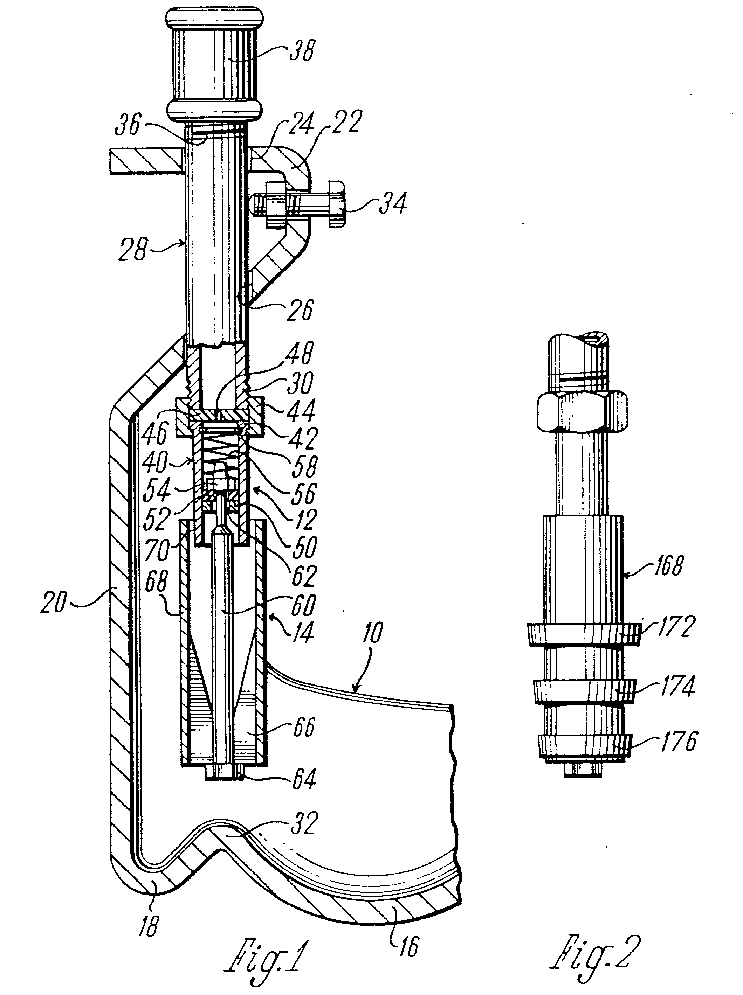

Die bevorzugte Ausführungsform besteht gemäss Fig. 1 hauptsächlich aus einem Tränkebecken 10, aus einer im Becken hinten angeordneten Ventilvorrichtung 12 und aus einer dieser Vorrichtung zugeordneten Betätigungsvorrichtung 14.

Das Tränkebecken 10 weist eine sich über seine ganze Breite und den grössten Teil seiner Tiefe erstreckende Wasserschale 16, eine hinter dieser Schale liegende, ständig unerreichbares Lockwasser enthaltende Rinne 18, eine diese hinten begrenzende, vertikale Rückwand 20 und einen im Längsschnitt V-förmigen Ansatz 22 am oberen Rand dieser Wand auf. Der über die Rinne 18 bis über die Wasserschale 16 vorspringende Ansatz 22 ist mit zwei zentral gelegenen, vertikal fluchtenden Bohrungen 24 und 26 versehen, die einen rohrförmigen Stutzen 28 aufnehmen, dessen unteres, mit einem Aussengewinde versehenes Ende 30 vertikal über der Mitte einer Erhebung 32 des Beckenbodens hängt, welche die Rinne 18 von der Wasserschale 16 abteilt. Der Stutzen 28 ist mittels einer am Ansatz 22 schraubbar festgelegten Schraube 34 am Ansatz 22 festgeklemmt. Das mit einem Aussengewinde versehene obere Ende 36 des vertikalen Stutzens 28 ist mittels einer Schraubmuffe 38 lösbar mit einer vertikalen Wasserleitung verbunden zu denken.

Die Ventilvorrichtung 12 weist ein an das untere Ende 30 des Stutzens 28 koaxial anschliessendes, kreiszylindrisches Ventilgehäuse 40 mit einem an seinem oberen Ende angeordneten Flansche 42 als Aussenbund auf, an dem eine auf das untere Stutzenende 30 geschraubte Überwurfmutter 44 angreift. Zwischen dem Flansch 42 und der unteren Stirnfläche des Stutzens 28 ist mit ihrem Rand eine Dichtungsscheibe 46 aus Kunststoff mit zentraler Drosselbohrung 48 eingeklemmt.

Das Ventilgehäuse 40 ist an seinem unteren Ende mit einem Innenbund 50 versehen, der einen scheibenförmigen Gummiring 52 als ortsfesten Ventilsitz trägt, der mit einem darüber angeordneten, beweglichen Ventilkörper 54 zusammenwirkt, den eine in dem gleichzeitig ein Federgehäuse darstellenden Ventilgehäuse 40 angeordnete, auf Druck beanspruchte Schraubenfeder 56 nach unten drückt, die sich dazu einerseits am Ventilkörper 54 und andererseits an einem dem Flansch 42 benachbarten Sprengring 58 abstützt, der im Ventilgehäuse 40 gelagert ist.

Der Ventilkörper 54 ist mittels eines Stabes 60 der Betätigungsvorrichtung 14 kippbar, welcher mit seinem oberen Ende den Ventilkörper 54 trägt und unmittelbar darunter mit dem zentralen Durchbruch des Gummiringes 52 einen Wasserdurchlass 62 bildet, an den nach unten ein weiterer Ringraum zwischen Stab 60 und Innenbund 50 anschliesst. Der massive kreiszylindrische Stab 60, dessen oberes Ende verjüngt ist, ragt mit seinem hauptsächlichen, verstärkten Abschnitt sehr weit über das untere Ende des Ventilgehäuses 40 hinaus vertikal nach unten bis vor die Erhebung 32 des Beckenbodens. An seinem unteren Ende ist der Stab 60 mit einer aufgeschraubten Mutter 64 versehen, die den Stabquerschnitt dort verbreitert. Die Mutter 64 trägt einen gleichmässig in Sektoren aufgeteilten und daher wasserdurchlässigen Einsatz 66 in der unteren Hälfte einer Hülse 68, deren oberes Ende das untere Ende des Ventilgehäuses 40 ein Stück weit aussen überlappt. Im Überlappungsbereich besteht zwischen den konzentrisch zu denkenden Enden des Ventilgehäuses 40 und der Hülse 68 ein Ringspalt 70, der dem oberen Hülsenende reichlich radiales Spiel bietet. Dagegen sitzt der Einsatz 66 am unteren Ende der Hülse 68 radial spielarm auf dem Stab 60. Die Hülse 68 kann daher bei vertikalem Stab 60 mit ihrer Längsachse einen Kegelmantel um die Stabachse beschreiben, dessen Öffnungswinkel vom Aussendurchmesser des Ventilgehäuses 40, vom Innendurchmesser der Hülse 68 und von deren Länge abhängt, falls die Beweglichkeit des oberen Hülsenendes durch den Einsatz 66 nicht stärker eingeschränkt ist. Durch den Ringspalt 70 kann unabhängig von einer natürlichen Schräglage der Hülse 68 jederzeit Luft von oben in diese einströmen. Das Ventilgehäuse 40 und die Hülse 68 bilden also einen Rohrunterbrecher.

Will ein Tier sich selbst tränken, dann braucht es mit seiner Schnauze nur, z.B. von vorn nach hinten, gegen die Hülse 68 zu drücken, worauf der Stab 60 ausgelenkt und das Ventil 52–54 geöffnet wird. Das vom Stutzen 28 durch das Ventilgehäuse 40 strömende Wasser fliesst spritzfrei in die Hülse 68, deren untere Mündungen am Einsatz 66 das durchgeflossene Wasser gegen den erhobenen Beckenboden strömen lassen. Auf der der gedrückten Seite der Hülse 68 diametral abgewandten Hülsenseite liegt das obere Ende der Hülse 68 in einem Punkt am unteren Ende des Ventilgehäuses 40 an, während an der diametral gegenüberliegenden Stelle zwischen denselben Enden eine grössere Lücke klafft. Der Ringspalt 70 hat demnach bei betätigter Ventilvorrichtung 12 wie bei unbetätigter keine genaue Kreisringform.

Die Variante der beschriebenen Ausführungsform stimmt mit dieser bis auf die Hülse 68 überein. Gemäss Fig. 2 weist die Hülse 168 der Variante drei äussere Ringnuten auf, die je einen radial vorstehenden, weicheren Ring 172 bzw. 174 bzw. 176 aufnehmen, die sich an der unteren Hälfte der Hülse befinden.

**Patentansprüche**

1. Einrichtung zum Tränken von Tieren, mit einem Tränkebecken (10) und einer im Becken angeordneten Ventilvorrichtung (12), die einen mittels eines normalerweise längs einer zentralen Achse der Ventilvorrichtung angeordneten Stabes (60) gegen die Rückstellkraft einer Feder (56) kippbaren Ventilkörper (54), der am hinteren Ende des Stabes gelagert ist, und einen ortsfesten Ventilsitz (52), der mit dem beweglichen Stab einen Wasserdurchlass (62) bildet, als mit dem Wasserdruck schliessendes Ventil aufweist; und mit einer bei geschlossenem Ventil (52, 54) im wesentlichen koaxial zum Stab (60) angeordneten Hülse (68) als Wasserleitung zwischen einem Ventilgehäuse (40) und dem Becken (10), welche mit mehreren Wasserdurchlässen versehen ist und an ihrem vorderen Ende radial spielarm am vorderen Ende des Stabes (60) sowie an ihrem hinteren Ende unter Bildung eines grösseres Spiel gebenden Ringspaltes (70) am vorderen Ende des Ventilgehäuses (40) gelagert ist, dadurch gekennzeichnet, dass bei vertikaler Anordnung der zentralen Achse ein die Wasserdurchlässe aufweisender, locker auf dem Stab (60) sitzender Einsatz (66) im unteren Ende der Hülse (68) vorgesehen ist, welcher auf einer radialen Verbreiterung (64) des unteren, aus der Hülse (68) herausragenden Stabendes steht.

2. Einrichtung nach Anspruch 1, dadurch gekennzeichnet, dass als Verbreiterung eine auf das mit einem Gewinde versehene untere Stabende geschraubte Mutter (64) vorgesehen ist.

3. Einrichtung nach Anspruch 1 oder 2, dadurch gekennzeichnet, dass die Hülse (168) mindestens eine äussere Ringnut aufweist, die einen radial vorstehenden Ring (172, 174, 176) aus weichelastischem Material aufnimmt.

4. Einrichtung nach einem der Ansprüche 1 bis 3, gekennzeichnet durch einen mittels seines oberen Endes (36) an eine Wasserzuleitung anschliessbaren, am Becken (10) festklemmbaren Stutzen (28), an dessen unterem Ende (30) das Ventilgehäuse (40) hängt.

5. Einrichtung nach Anspruch 4, dadurch gekennzeichnet, dass am oberen Ende des Ventilgehäuses (40) ein der unteren Stirnfläche des Stutzens (28) gegenüberliegender Bund (42) vorgesehen ist und dass das Ventilgehäuse (40) eine am Bund (42) angreifende Überwurfmutter (44) trägt, die, gegebenenfalls unter Einklemmung einer Dichtungsscheibe (46) mit zentraler Drosselbohrung (48) zwischen Bund und unterer Stutzenstirnfläche, auf ein Aussengewinde am unteren Stutzenende (30) schraubbar ist.

## Claims

1. Drinking device for animals, with a watering trough (10) and, located in the trough, a valve device (12) which has a valve closing with water pressure, constituted by a valve body (54) adapted to be tilted against the restoring force of a spring (56) by means of a rod (60) normally disposed longitudinally of a central axis of the valve device, the said valve body (54) being mounted at the rear end of the rod, and also constituted by a fixed valve seat (52) which, with the movable rod, forms a water through-flow aperture (62), and comprising, disposed substantially coaxially of the rod (60) when the valve (52, 54) is closed, a sleeve (68) which serves as a water pipe between a valve body (40) and the trough (10), and which is provided with a plurality of water through-flow apertures and being mounted at its front end with minimal radial clearance at the front end of the rod (60) and at its rear end in such a way as to form an annular gap (70) at the front end of the valve body (40) to provide a greater clearance, characterised in that with a vertical disposition of the central axis there is, comprising the water through-flow apertures and seated loosely on the rod (60) an insert (66) in the bottom end of the sleeve (68) which is mounted on a radially widened-out part (64) of the bottom end of the rod which projects from the sleeve (68).

2. A device according to Claim 1, characterised in that the widening-out which is provided is a nut (64) which is screwed onto the bottom end of the rod, on which a screw thread is provided.

3. A device according to Claim 1 or 2, characterised in that the sleeve (168) has at least one outer annular groove which accommodates a radially projecting ring (172, 174, 176) of softly elastic material.

4. A device according to one of Claims 1 to 3, characterised by a connecting pipe (28) adapted to be clamped securely on the trough (10) and to be connected at its upper end (36) to a water supply pipe, the valve body (40) being suspended from the bottom end (30) of the pipe (28).

5. A device according to Claim 4, characterised in that there is a collar (42) provided at the upper end of the valve body (40) and opposite the bottom end face of the connecting pipe (28) and in that the valve body (40) carries, engaging the collar (42), a cap nut (44) which is adapted to be screwed onto an external screwthread at the bottom end (30) of the connecting pipe, possibly with a gasket (46) having a central throttling bore (48) being interposed and clamped between the collar and the bottom end face of the connecting pipe.

## Revendications

1. Dispositif pour l'abreuvage d'animaux, comportant un bassin d'abreuvage (10) et un dispositif à valve (12) disposé dans ledit bassin et comprenant un obturateur de valve (54) qui est apte à basculer, à l'encontre de la force de rappel d'un ressort (56) et sous l'action d'une tige (60) normalement disposée le long d'un axe central du dispositif à valve et qui est monté à l'extrémité arrière de ladite tige, et un siège de valve fixe (52) constituant avec ladite tige mobile un passage pour eau (62), du type à valve se fermant sous la pression de l'eau; et comportant un manchon (68), sensiblement coaxial à ladite tige (60) lorsque la valve (52, 54) est fermée et servant de conduite d'eau entre un corps de valve (40) et le bassin (10), ledit manchon étant pourvu de plusieurs orifices à eau et étant monté, par son extrémité avant, à l'extrémité avant de la tige (60) avec un faible jeu dans le sens radial, et, par son extrémité arrière, à l'extrémité avant dudit corps de valve (40) en définissant un interstice annulaire (70) permettant un jeu plus important, caractérisé en ce que, l'axe central étant disposé verticalement, l'extrémité inférieure du manchon (68) porte un insert (66) placé, de façon lâche, sur la tige (60) et pourvu d'orifices à eau, ledit insert reposant sur un élargissement radial (64) de l'extrémité inférieure, saillant hors du manchon (68), de la tige.

2. Dispositif selon la revendication 1, caractérisé en ce que l'élargissement est constitué par un écrou (64) vissé sur l'extrémité inférieure de la tige, pourvue d'un filetage.

3. Dispositif selon la revendication 1 ou 2, caractérisé en ce que le manchon (168) comporte au moins une gorge annulaire extérieure qui reçoit un anneau (172, 174, 176) faisant saillie radialement et constitué en un matériau élastique mou.

4. Dispositif selon l'une des revendications 1 à 3, caractérisé par un raccord (28) apte à être fixé sur le bassin (10) et à être connecté à une conduite d'amenée d'eau par son extrémité supérieure (36), le corps de valve (40) pendant à son extrémité inférieure (30).

5. Dispositif selon la revendication 4, caractérisé en ce que l'extrémité supérieure du corps de valve (40) comporte un collet (42) placé en regard de la face frontale inférieure du raccord (28), et en ce que le corps de valve (40) port un écrou d'accouplement (44) venant en prise sur le collet (42) et apte à être vissé sur un filetage extérieur de l'extrémité inférieure (30) du raccord, le cas échéant en serrant, entre ledit collet et ladite face frontale inférieure du raccord, une rondelle d'étanchéité (46) pourvue d'un orifice d'étranglement central (48).

0 043 413

*Fig.1*

*Fig.2*

7